# EUROPEAN PATENT SPECIFICATION

(11) **EP 4 616 567 B1**
(45) Date of publication and mention of the grant of the patent: **08.07.2026**
(21) Application number: 23793380.9
(22) Date of filing: 20.10.2023
(51) Int. Cl.: H04L 9/00, H04L 9/32

(54) **GENERATION AND VALIDATION OF TRUSTED NON-FUNGIBLE TOKENS**
ERZEUGUNG UND VALIDIERUNG VON VERTRAUENSWÜRDIGEN NICHT-FUNGIBLEN TOKEN
GÉNÉRATION ET VALIDATION DE JETONS NON FONGIBLES DE CONFIANCE

(30) Priority: 07.11.2022 EP 22205867
(43) Date of publication of application: 17.09.2025
(73) Proprietor: Nagravision Sàrl, 1033 Cheseaux-sur-Lausanne (CH)
(72) Inventor: BIEBER, Yann, 1033 Cheseaux-sur-Lausanne (CH)
(74) Representative: Meissner Bolte Partnerschaft mbB
(86) International application number: PCT/EP2023/079346
(87) International publication number: WO 2024/099741

(56) References cited:
- US-A1- 2022 006 642
- US-A1- 2022 309 491
- US-A1- 2022 318 233

## Description

### TECHNICAL FIELD OF THE INVENTION

The present invention relates to computer-implemented methods for minting trusted NFTs on a blockchain. A complementary computer-implemented method of validating an NFT which has been minted on a blockchain. Corresponding systems, computer programs, and computer-readable storage media are also provided.

### BACKGROUND TO THE INVENTION

Trading of non-fungible tokens, or NFTs, has opened up a new digital world for content creators and artists to expand the audiences for their work. An NFT may be defined as a record on a blockchain which is associated with a particular digital or physical asset. An NFT transforms a digital file into a digital asset. The NFT is created and stored on a blockchain (Ethereum, for example) which establishes its provenance. The present application is concerned only with digital assets, rather than physical assets. The NFT is not the digital file itself, but rather a token which serves as a representation of the digital file. More specifically, the NFT may include a URI which provides the location of a metadata file (in the form of a JSON file) which is stored at some location. That metadata file then contains information about the digital asset including, crucially, the storage location of that digital asset.

The ownership of an NFT may be established and stored in the blockchain, enabling the NFTs to be exchanged, bought, and sold. It is often stated that NFTs are able to provide a certificate of authenticity or proof of ownership, due to the immutability of the record on the blockchain. The legal rights arising from NFTs is, however, hotly debated. Document US 2022/309491A1 discloses the minting process of the NFT.

In economics, fungibility is the property of an asset or commodity which means that it can be interchanged with other individual goods or assets of the same type. Cash is an example, since one €100 note could be exchanged for another €100 note, and it would have the same value. Similarly, that €100 note could be exchanged for 10 × €10 notes, and again the value would be the same. NFTs are uniquely identifiable, which is a necessary property to ensure that they are useful indicators of provenance, and therefore they are non-fungible. This means that it is not possible to exchange one NFT for another NFT; they would not be equivalent.

Before discussing the invention in detail, we explain in general terms "how NFTs work", and explain how malicious actors can take advantage of the system. In some cases, in order to generate an NFT, firstly a smart contract is deployed on a blockchain. Alternatively, an existing smart contract may be retrieved from the blockchain. The digital asset in question (e.g. an image file, plaintext file, music file, 3D model, virtual property, metaverse, or a video file) is stored in some location having an address, preferably in the form of a URL. Then, metadata in the form of a JSON file is generated, the metadata containing the URL of the digital asset, along with other information e.g. the file name, and a description of the digital asset. That metadata is then also stored in some location having an address, again preferably in the form of a URL.

Finally, the NFT is minted.

"Minting" refers to publication of the NFT onto the blockchain. Specifically, the metadata address is provided as an input to the smart contract, and subsequently (or in response to receiving the input) the smart contract is executed and gives rise to minting of the NFT on the blockchain. When the smart contract is queried, it will return the URL of the metadata address, which itself describes the location of the digital asset itself.

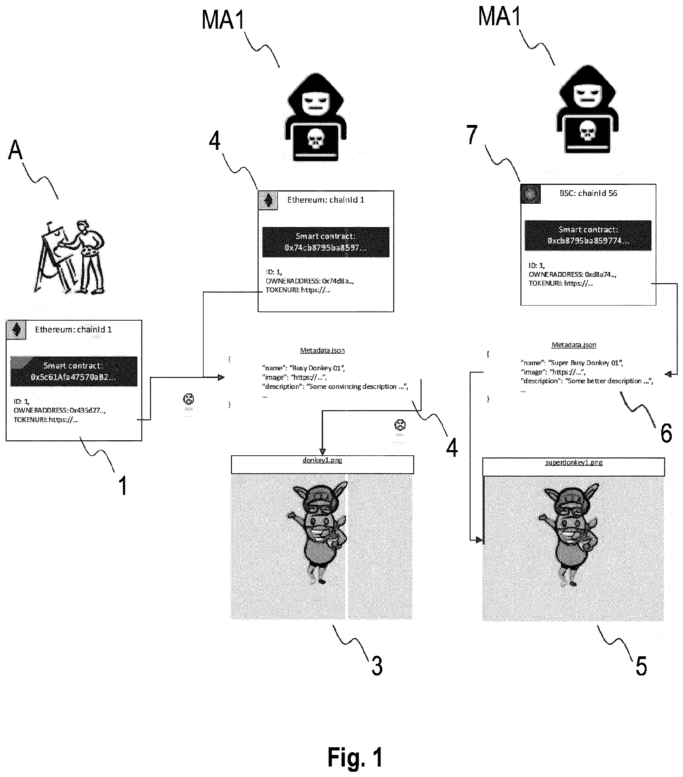

Fig. 1 illustrates two ways in which malicious actors MA1 and MA2 may fraudulently sell duplicate, or altered NFTs on e.g. an NFT marketplace. The "genuine" NFT 1, minted by (or on behalf of) the artist A is shown on the left-hand side of the drawing. In the example shown, the genuine NFT is published on the *Ethereum* blockchain, but it will be appreciated that this is just an example. The genuine NFT is minted by a smart contract 1 having the ID shown, and includes an URL of the metadata JSON file 4, which itself contains the URL of the digital asset 3 (in this case, a cartoon of a donkey).

As discussed, conventional generation and minting of NFTs can be fraudulently taken advantage of by malicious actors MA1 and MA2. Specifically, malicious actors MA1 and MA2 may be able to sell "fake" NFTs on an NFT marketplace. Fig. 1 illustrates two ways in which they may do so:
- MA1 may deploy another smart contract 4 on the blockchain, which mints another NFT containing the URL of the real metadata JSON file 2. However, ownership of this NFT is meaningless, since it was not minted by (or on behalf of) the artist themselves. It is, therefore, worthless. Of course, this fraudulent behaviour could be spotted by paying close attention to the smart contract addresses, but often malicious actors deliberately select smart contract addresses which are superficially close to the genuine address. And, a large proportion of people in the NFT trading market are inexperienced with blockchain technology, meaning that they may not think to check the smart contract addresses when purchasing an NFT.
- MA2 may deploy a more sophisticated technique. MA2 generates a copy 5 of the digital asset 3, and stores it at some URL. MA2 then generates an NFT in the form of a metadata JSON file 6 referencing the URL of the copy 5 of the digital asset 3, and mints it using a smart contract 7 which is deployed on a different blockchain, in this case *BSC.* In this case, it is more difficult for the fraud to be caught.

Another issue with NFTs is that they can be broken or tampered with because the storage they use is neither permanent nor secure. This means that the NFTs may simply stop functioning after some time.

The present invention has been devised in order to prevent both of these kinds of malicious activity.

### SUMMARY OF THE INVENTION

Broadly speaking, the present invention addresses the issues set out in the previous section in the provision of a computer-implemented method for generating trusted non-fungible tokens (herein, "NFTs") in which a blockchain-specific NFT ID is generated and inserted into the digital asset either before or after the NFT is minted by a smart contract (whether insertion takes place before or after minting depends on the exact nature of the blockchain to which the NFT is minted). In this way, it is possible to validate an NFT on an NFT marketplace before purchase, for example, since a direct link is provided between the minting smart contract and the digital asset itself. If the NFT ID which is inserted into the digital asset does not match an expected NFT ID corresponding to various details of e.g. the smart contract ID, token ID, smart contract creator etc., then it may be determined that fraudulent activity has taken place, and a warning may be displayed to a user, for example. The invention provided a corresponding computer-implemented method for validating an NFT, e.g. before trade or purchase on a marketplace, or the like. We now discuss the various aspects of the invention in more detail. The invention is defined in the appended claims.

A first aspect of the present invention provides a computer-implemented method of minting a trusted NFT on a blockchain, the NFT corresponding to a digital asset. The computer-implemented method comprises the steps of: receiving a request to mint the NFT on the blockchain; accessing programming logic on the blockchain, the programming logic configured to mint the NFT to the blockchain; generating an NFT ID which comprises data identifying the NFT; inserting the NFT ID into the digital asset to generate a modified digital asset; storing the modified digital asset in an electronic memory, the storage location of the modified digital asset described by a first electronic storage address; generating metadata comprising the first storage address and storing the generated metadata in an electronic memory, the storage location of the metadata described by a second electronic storage address; providing the second electronic storage address as an input to the programming logic; and executing the programming logic, thereby minting the trusted NFT to the blockchain.

As outlined previously, the insertion of an NFT ID into the digital asset, the NFT ID corresponding to the smart contract, establishes a direct, verifiable link between the modified digital asset and the smart contract. This enables a validation process to take place, which in turn enables purchasers or traders of NFTs to ensure that no fraudulent activity has taken place before making a trade or purchase. This ensures that the minted NFT is verifiable.

We now set out various explanations of terms used in the application, and optional features which may be combined with the first, or any other, aspects of the invention.

A first term which is important to discuss is the term "NFT" itself. As discussed, an NFT may be defined as a record on a blockchain which is associated with a particular digital or physical asset. In the context of the present invention, the "NFT" refers to a record which has been minted, i.e. published to the blockchain, and which contains information indicating the storage location of the metadata which describes and points to the modified digital asset. The metadata may be in the form of a metadata file, for example in JavaScript Object Notation (herein, "JSON"). The NFT, i.e. the metadata file may include, in addition to the first electronic storage address, a file name and/or a description of the digital asset. The NFT may also contain data identifying (preferably uniquely) a minting authority which minted or caused the minting of the NFT. The term "minting authority" may refer to the user or entity which requested the minting (more specifically, a unique identifier thereof), or the programming logic (e.g. a smart contract, see below) whose execution minted the NFT. Inclusion of this information in the NFT is beneficial for a validation process, described in detail later with reference to the computer-implemented method of the third aspect of the invention.

In the context of the present application, the term "blockchain" is used in the normal manner, to describe a growing list of records, referred to as "blocks", which are linked together sequentially using cryptographic techniques such as hashing. Specifically, each block may include a hash of the previous block, a timestamp, and transaction data. The blocks form a chain because each includes information which is generated based on the contents of the previous block. As a result, transactions in the block are irreversible, and immutable because data in a given block cannot be modified without detection, since the hash of the modified data would necessarily give rise to a different hash from the hash stored in the subsequent block. Blockchains are generally managed by a peer-to-peer network, rather than a central managing authority. In this way, blockchains are often referred to as a public "distributed ledger". Nodes of the blockchain collectively adhere to a consensus algorithm protocol to add and validate new transactions.

There are many types of blockchain, and many commercially available specific blockchains. An important class of blockchains are EVM-compatible blockchains, where "EVM" stands for Ethereum Virtual Machine. Examples of EVM-compatible blockchains include *Binance Smart Chain* (*BSC*), *Fantom, Polygon,* and *Avalanche.* Many other EVM-compatible blockchains are available¹. EVM-compatible blockchains are advantageous because they are widely-available, and enable the use of smart contracts. The EVM may be described as a distributed state machine. The state of an EVM-compatible blockchain is a large data structure which holds not only all accounts and balances, for example, but also a machine state, which can change from block to block according to a predetermined set of rules, and which can execute arbitrary computer code. The specific rules of changing state from block to block are defined by the EVM-compatible blockchain. EVM-compatible blockchains are blockchains which create or have an EVM-like code environment. Details of the EVM can be found in the *Ethereum* yellow paper². Thus, in some implementations of the computer-implemented method of the present invention, the blockchain is an EVM-compatible blockchain.
¹ https://chainlist.org/
² https://ethereum.github.io/yellowpaper/paper.pdf

In some cases, the computer-implemented method may be executed by a module of an NFT marketplace server, on which NFTs hosted on a range of different blockchains may be bought, sold, or otherwise traded. In such cases (or indeed other cases) the request to mint the NFT on the blockchain may comprise information identifying the blockchain on which the originating user wishes to mint the NFT. Herein, the term "originating user" refers to the user, user account, or device from which the request originates.

The term "programming logic" is used in the definition of the invention above. This well-known term refers broadly to any computer-implemented logic, or a computer program, which is capable of executing some predetermined function. In the present case, the function of the programming logic is to mint the NFT to the blockchain, e.g. in response to a provided input (more detail later). The programming logic is preferably implemented in code in a computer-readable language. The code preferably serves as instructions, which when executed by a processor of a computing device, cause the computing device to execute the function in question.

Herein, "accessing" the programming logic may cover several scenarios. The computer-implemented method may include a step of deploying programming logic on the blockchain, which is then followed by the step of accessing the deployed programming logic. Alternatively, in some cases, pre-existing programming logic may be used. In these cases, the computer-implemented method may comprise a step of retrieving existing programming logic which is already deployed on the blockchain, followed by the step of accessing the retrieved programming logic. In other cases, the blockchain may have a library of standard programming logic (see below). In these cases, the library of standard programming logic may be accessed.

In some cases, the programming logic may be in the form of a smart contract. The term "smart contract" refers to a program stored on a blockchain which run when predetermined conditions are met. More specifically, the smart contract may comprise code which comprises instructions which are executed when a predetermined condition (e.g. an "IF" or "WHEN" condition) is met. The computer code may also comprise a portion of code which encodes the predetermined condition. In the context of cryptocurrencies, execution of a smart contract, in response to some input, may cause a transfer of funds from one user to another. The use of smart contracts is beneficial because the blockchain is updated when the transaction is completed, meaning that the transaction cannot be altered retroactively. In the context of the present invention, the smart contract may be referred to a "minting contract". In implementations of the present invention, the smart contract may be configured to mint the NFT to the blockchain in response to a predetermined condition being met. For example, the smart contract may be configured to mint the NFT to the blockchain in response to receiving one or more inputs, the one or more inputs comprising the second electronic storage address. The one or more inputs may further comprise a minting input, which actuates the minting process in response to receipt of one or more other inputs. Accordingly, and for completeness, the computer-implemented method may comprise, minting the NFT in response to insertion of the second electronic storage address into the smart contract, the minting executed or otherwise caused or effected by the smart contract.

Depending on the type of blockchain being used, the smart contract may be in the form of a custom smart contract which a user generates and deploys on the blockchain. In these cases the computer-implemented method may comprise deploying a (custom) smart contract on the blockchain, or retrieving a (custom) smart contract which has already been deployed on the blockchain. The latter may be the case, for example, when a given user or minting authority uses the same smart contract to mint more than one NFT. This is possible for e.g. EVM-compatible blockchains.

Alternatively, for other blockchains such as the *Solana* and *Algorand* blockchains, a library of standard smart (or minting) contracts exists. In these cases, the computer-implemented method may comprise retrieving a standard smart contract which has already been deployed on the blockchain, or accessing a standard smart contract from the library. In some cases, a standard smart contract may be accessible by a plurality of users or minting authorities.

For the avoidance of doubt, when the term "smart contract" is used in this application, it should be understood to encompass either to a custom smart contract created by a minting authority (e.g. on an EVM-compatible blockchain), or a standard smart contract which is retrieved from or accessed in a library of standard smart contracts. The term "smart contract" is not necessarily restricted to these examples, and it may used to refer to any suitable blockchain-deployable or blockchain-deployed computer program which executes a particular function in response to one or more predetermined inputs.

The cornerstone of the present invention is the generation and insertion of a NFT ID into the modified digital asset. By inserting information uniquely identifying the NFT in the digital asset, a loop is effectively closed: the NFT includes information indicating a storage location of the metadata, the metadata includes information indicating a storage location of the digital asset, and the digital asset includes information (in the form of the NFT ID) which (preferably uniquely) identifies the NFT. For the avoidance of doubt, the "NFT" is the NFT which is to be minted. With that in mind, we now discuss the NFT ID in more detail.

The NFT ID may be blockchain-specific, or alternatively put, the NFT ID may be specific to the blockchain on which the NFT is to be minted ("to be minted" is used here, because at this point, the NFT has not been minted by the smart contract). By "specific to the blockchain", it is to be understood that the components which make up the NFT ID are dependent on the nature of the blockchain on which the NFT is to be minted. The NFT ID may be in the form of a block of data comprising one or more sub-blocks, each sub-block comprising data indicative of a respective attribute or aspect of the NFT to be minted. In preferred cases, the NFT comprises at least one sub-block related to the minting domain (e.g. the minting authority, the minting contract, the creator account, or the mint address), and at least one sub-block uniquely identifying the token within the minting domain (e.g. a token ID, an asset name, or a file name)

For example, the NFT ID may comprise a sub-block of data representing an address or ID of the programming logic (e.g. a custom smart contract) on the blockchain which is used to mint the NFT. The NFT ID may also comprise a sub-block of data representing an address or ID of the blockchain itself. In some cases, the computer-implemented method may comprise retrieving programming logic such as a custom smart contract which has already been deployed on the blockchain, and that smart contract may be configured to mint a plurality of separate NFTs (at different times). For example, a given NFT-minting service may be associated with a single minting contract, but uses that contract to mint a plurality of NFTs over a period of time. In this case, a smart contract may comprise a plurality of token identifiers, each associated with a respective NFT. Then, the NFT ID may comprise a sub-block of data representing a token identifier. The token identifier may designate, identify, describe or define the NFT corresponding to the digital asset.

The NFT ID uniquely identifies the NFT to be minted, i.e. the content of the NFT ID does not and cannot describe more than one smart contract. According to the computer-implemented method of the first aspect of the invention, the minting step takes place after insertion of the NFT ID into the digital asset. For this reason, it is advantageous to use a blockchain in which it is possible to determine the data making up the sub-blocks in advance of the minting step. Alternatively put, the NFT ID may comprise sub-blocks of data, wherein the sub-blocks of data are derivable before the NFT is minted.

In EVM-compatible blockchains, the blockchain identifier and the smart contract address are known before the NFT is minted. And, a token identifier in a smart contract on an EVM-compatible blockchain generally increases by one, or follows any other predictable pattern, as the smart contract is used to mint another NFT. Thus, although it is not *known,* the token identifier is predictable, i.e. derivable, before the smart contract is used to mint the NFT. Accordingly, in implementations in which the blockchain is an EVM-compatible blockchain, the NFT ID may comprise a first sub-block comprising a blockchain identifier (or "chain ID"); a second sub-block comprising a smart contract address; and a third sub-block comprising a token identifier.

In some cases, where it is not possible to derive or determine e.g. a token ID which uniquely defines the NFT, other information may be used, specifically other information which is derivable before the minting step. For example, the NFT ID may comprise a sub-block comprising a file name associated with the digital asset; a user identifier associated with digital asset; and/or an account identifier associated with the digital asset. Preferably, at least one sub-block comprises information which uniquely identifies the NFT.

In some cases, information which uniquely identifies the NFT is only available after minting. Such cases are discussed later, with reference to the second aspect of the invention.

Having discussed the generation of the NFT ID, we now discuss the manner in which it may be inserted into the digital asset. The digital asset may be in the form of an image file, a video file, an audio file, a text file, or the like. This list is by no means exhaustive, and it will be appreciated that NFTs may be generated and minted in respect of any kind of digital asset. In many cases, the data representing the digital asset will include metadata. In such cases, inserting the NFT ID into the digital asset may comprise inserting the NFT ID into the metadata relating to the digital asset. In these cases, the NFT ID may be stored at the first electronic storage address along with the digital asset.

In other cases, rather than or in addition to the NFT ID being stored in the metadata related to the data relating to the digital asset, the NFT ID may be embedded into the data representing the digital asset. When the NFT ID is embedded into the data representing the digital asset itself, there is no separate e.g. field which comprises the NFT ID after it is stored: the combination of the digital asset and the NFT ID is represented by a unitary set of data. Techniques for embedding data into digital assets in this manner are well-known, and include e.g. steganography and watermarking. These techniques are known for all types of digital asset, be they audio files, video files, image files, text files, or any other kinds of file.

In the context of the present application, the term "modified digital asset" is used to refer to the combination of the NFT ID and the digital asset, either when the two are represented by a unitary set of data, or as a digital asset and metadata, or any other combination.

If a malicious actor were to become aware that an NFT marketplace or other NFT trading service were using the computer-implemented method of the present invention, they may begin generating NFT IDs and inserting them into digital assets, which would enable them to continue fraudulent behaviour. It is therefore desirable to include a further layer of security, which may form the subject of an additional check during a validation process. Specifically, it is desirable to apply a further layer of security which cannot be copied or forged by a malicious actor. This may be done by signing the digital asset the modified digital asset, or the NFT ID using a private key. Herein, "private key" is used to refer to one of a key-pair which is known only by trusted parties. The key-pair also includes a complementary "public key", which is (as the name suggests) publicly available. When a signature is generated using a private key, it may be straightforward to verify using the publicly available public key. However, with only access to the public key, it is generally extremely difficult to the point of being practically impossible to generate a signature which could be verified using that public key. The key-pair may be an elliptical key-pair. The digital signature may be generated using the Digital Signature Algorithm, described by the standard FIPS 186-4³. An ECDSA signature may also be applied to the digital asset, modified digital asset or NFT ID. The digital signature may also be generated based on RSA public-key cryptography. Accordingly, the computer-implemented method may further comprise applying, using a private key of a trusted party, a digital cryptographic signature to the modified digital asset or the digital asset. The private key which is used may be a wallet private key of the minting authority (i.e. the user or entity which is generating and minting the NFT), so that validation of the signature can rely on the same mechanisms as the blockchain.
³ https://nvlpubs.nist.gov/nistpubs/FIPS/NIST.FIPS.186-4.pdf

The signature may be generated based on the data representing the digital asset, or the data representing the modified digital asset. The signature may be stored along with the modified digital asset. In some cases, the signature may be inserted into the digital asset in the same way that the NFT ID is. For example, metadata relating to the digital asset may comprise the digital signature (as well as e.g. the NFT ID). Or, the signature may be embedded in the data representing the digital asset itself (e.g. as a watermark, or using another steganographic technique). Alternatively, the signature may be stored as a separate file at the first electronic storage address. The digital signature may also be contained in the metadata file at the second electronic storage address.

It was mentioned above that the private key is associated with a trusted party. Herein, the trusted party may refer to e.g. the artist or creator of the digital asset, the trusted marketplace on which the NFT is being sold or traded, a third party trusted NFT minting service, or the like. Each trusted party also has a complementary public key. There may exist a repository of public keys belonging to the trusted parties. Because of the asymmetric nature of public-private key-pairs used for digital signature generation, it does not matter that the verification keys are known publicly, because it is nigh-on impossible to generate a digital signature which could be verified using a public key from knowledge of the public key alone. Indeed, this is the foundation on which public key cryptography is built.

We now discuss in more detail the first electronic storage address and the second electronic storage address. As discussed previously, one issue with existing NFT systems is that the storage they use is neither permanent nor secure. This means that the NFTs can simply stop functioning after some time. In order to address this particular issue, it is desirable to store the metadata file and the digital asset on a storage system, or using a storage service or provider which is able to guarantee secure and durable and permanent storage. Specifically, the first electronic storage address and/or the second electronic storage address may correspond to a location in a decentralized, permanent storage system. For example, the first storage address and/or the second storage address may correspond to a location in a storage system which utilizes an *Arweave⁴* protocol. Alternatively or additionally, the first electronic storage address and/or the second electronic storage address may correspond to a location in an IPFS storage system utilizing a *Filecoin⁵* protocol. These protocols are merely examples, and it will be readily understood what is meant by permanent/durable and decentralized storage. Specifically, "decentralized" means that data is not stored in one specific location, but that several copies of the data are stored across a plurality of nodes. Decentralized storage may rely on, or be based on blockchain technology, in order to ensure that data stored on the system may not be tampered with, or remains immutable. And, "permanent" or "durable" storage refers to storage which is guaranteed for a long time, which may be effectively permanent, i.e. over several years, decades, or centuries. Many storage services offer this for the payment of a fee. The *Arweave* protocol enables this using "blockweave" technology, explained in the cited reference. Essentially, in this case, permanent or effectively permanent storage is enabled using a succinct random proofs-of-access (SPoRA) algorithm⁶ and Wildfire, explained in the cited reference.
⁴ https://www.arweave.org/yellow-paper.pdf
⁵ https://spec.filecoin.io/
⁶ https://github.com/ArweaveTeam/arweave-standards/blob/ans-103/ans/ANS-103.md

The first electronic storage address and the second electronic storage address may be in the form of URLs or URIs.

The preceding disclosure relates to a computer-implemented method of minting a trusted NFT on a blockchain, using a process in which data which uniquely identifies the NFT can be determined before the NFT is minted to the blockchain. However, using an alternative computer-implemented method, it is possible to generate and mint a trusted NFT on a blockchain where the uniquely identifying information is available only after the NFT has been minted to the blockchain. At a high-level, this is achieved by minting an NFT containing a dummy electronic storage address, and replacing this with a second electronic storage address corresponding to the address of the metadata file after the NFT has been minted.

Specifically, a second aspect of the present invention provides a computer-implemented method of minting a trusted and verifiable NFT on a blockchain, the NFT corresponding to a digital asset. The computer-implemented method comprises the steps of: receiving a request to mint the NFT on the blockchain; deploying, retrieving, or accessing programming logic on the blockchain, the programming logic configured to mint the NFT to the blockchain; providing a dummy electronic storage address as an input to the programming logic; executing the programming logic, thereby minting a temporary NFT to the blockchain; generating an NFT ID uniquely identifying the NFT; inserting the NFT ID into the digital asset to generate a modified digital asset; storing the modified digital asset in an electronic memory, the storage location of the modified digital asset described by a first electronic storage address; generating metadata comprising the first storage address and storing the generated metadata in an electronic memory, the storage location of the metadata described by a second electronic storage address; replacing the dummy electronic storage address in the minted NFT with the second storage address, thereby generating the trusted NFT.

The computer-implemented method of the second aspect of the invention is executable in respect of blockchains for which the token URL or URI (i.e. the dummy electronic storage address) is a mutable parameter. As explained in more detail in the "Detailed Description" section of this application, one example of a suitable blockchain is the *Solana* blockchain, but the computer-implemented method of the second aspect of the invention may be applied to e.g. an EVM-compatible blockchain if a custom smart contract is deployed (or retrieved) which supports mutability of the second storage address in the NFT. The computer-implemented method of the second aspect of the invention may further include a step of updating the properties of the smart contract to prevent further modification of the NFT, after the dummy electronic storage address has been replaced with the second electronic storage address.

It will be appreciated that the trusted NFT generated according to the computer-implemented method of the second aspect of the invention takes the same form as the trusted NFT generated according to the computer-implemented method of the first aspect of the invention. The optional features set out above in respect of the computer-implemented method of the first aspect of the invention are equally applicable to the computer-implemented method of the second aspect of the invention, except where clearly technically incompatible or where context dictates otherwise. In particular, but in no way exclusively, the optional features set out in relation to the nature of the programming logic, the blockchain-specificity and the general form of the NFT ID (including the fact that it uniquely identifies the smart contract), the manner in which the NFT ID may be inserted into the digital asset, the addition of the digital signature, and the nature of the storage system and electronic storage addresses, also apply to the computer-implemented method of the second aspect of the invention.

The preceding aspects of the disclosure relate to the generation and minting of a trusted NFT. A third, complementary aspect of the disclosure relates to a process whereby an NFT may be validated before a sale or trade. At a high-level, this is done by following the chain of data inherent within the NFT, extracting the NFT ID from the modified digital asset, and determining whether it corresponds to the programming logic responsible for minting the NFT. More specifically, a third aspect of the invention provides a computer-implemented method of validating a non-fungible token (NFT) stored on a blockchain, the NFT corresponding to a digital asset, the NFT including a second electronic storage address at which metadata corresponding to a modified digital asset is stored, the modified digital asset being stored at a first electronic storage address. The computer-implemented method comprises: receiving a request to validate the NFT, the NFT including data identifying a minting authority which minted or caused minting of the NFT to the blockchain; retrieving the metadata from the second electronic storage address; retrieving the modified digital asset from the first electronic storage address specified in the metadata; extracting, from the modified digital asset, a NFT ID comprising data uniquely identifying the NFT; comparing the data extracted from the NFT ID with the data identifying the minting authority which minted or caused minting of the NFT to the blockchain, in order to determine whether the NFT is valid.

When the NFT is a trusted NFT generated according to the computer-implemented method of the first aspect of the invention or the second aspect, the NFT ID will comprise information which uniquely identifies the NFT (e.g. information about the smart contract and e.g. a token identifier or additional information about the digital asset).

Put explicitly, the NFT may be generated and minted according to the computer-implemented method of the first aspect of the invention or the computer-implemented method of the second aspect of the invention, along with any optional features set out previously in this application.

If the information in the NFT ID does not match or is not comparable to the received information about the smart contract, it may be concluded that the minting authority identified in the NFT which formed the subject of the initial request was not actually responsible for the minting of the NFT in the first place. The minting authority identified in the NFT which forms the subject of the request may correspond to programming logic, the execution of which is alleged or said to be responsible for the minting of the NFT in question.

More specifically, if the information extracted from the NFT ID is consistent with, identical to, or comparable to the data identifying the minting authority which minted or caused the minting of the NFT, it may be determined that the NFT is valid. Conversely, if the information extracted from the NFT ID is not consistent with, identical to, or comparable to the data describing the smart contract, it may be determined that the NFT is not valid.

The advantages of an additional layer of security in the form of a digital signature were also set out earlier in this application. Naturally, it is also possible to capitalize on these advantages in implementations of the computer-implemented method of the third aspect of the invention. Specifically, the computer-implemented method may comprise determining whether the modified digital asset includes a digital signature. In the event that the modified digital asset does not include a digital signature, the computer-implemented method may comprise generating a flag notifying a user that the modified digital asset is not signed. This may serve as a warning to a user that the NFT may have been generated by a malicious actor using one of the methods of MA1 or MA2 of Fig. 1, and by generating an appropriate NFT ID. When a digital signature is present, e.g. when it is determined that a digital signature is present, the computer-implemented method may comprise verifying the digital signature using one or more public keys, each associated with a respective trusted party. More specifically, the computer-implemented method may comprise verifying the digital signature with a public key corresponding to a trusted party responsible for generating and minting the NFT. Herein, the trusted party may refer to e.g. the artist or creator of the digital asset, the trusted marketplace on which the NFT is being sold or traded, a third party trusted NFT minting service, or the like. If the digital signature is verified using the public key of a trusted party, the digital signature may be deemed to be valid. And, conversely, if the digital signature is not verified using the public key of a trusted party, the digital signature may be deemed not to be valid.

Optional features set out earlier in this application in respect of the first and second aspects of the invention may be applied to the third aspect of the invention unless clearly technically incompatible or where context clearly dictates otherwise.

Additional aspects of the invention may relate to systems configured to execute the computer-implemented method of any one of the first, second, and third, aspects of the invention. Specifically, the system may comprise a processor which is configured to execute the respective computer-implemented method. Similarly, other aspects of the invention may provide a computer program comprising instructions which, when the program is executed by a computer, cause the computer to carry out the steps of a computer-implemented method of any one of the first, second, and third aspects of the present invention. A further aspect of the invention may provide a computer-readable storage medium, having stored thereon the computer program of the previous aspect of the invention.

To reiterate, the invention includes the combination of the aspects and preferred features described except where such a combination is clearly impermissible or expressly avoided.

### BRIEF DESCRIPTION OF THE DRAWINGS

Embodiments of the present invention will now be described with reference to the accompanying drawings, in which:
- Fig. 1 is a schematic diagram illustrating the ways in which malicious actors may fraudulently sell fake or stolen NFTs on a marketplace.
- Fig. 2 shows a system which may be configured to execute a computer-implemented method according to one or more aspects of the present invention.
- Fig. 3 is a flowchart illustrating an exemplary process for generating and minting trusted NFTs according to the present invention.
- Fig. 4 is a flowchart illustrating an alternative exemplary process for generating and minting trusted NFTs according to the present invention.
- Fig. 5 is a schematic diagram illustrating the chain of data which must be unbroken in order to validate an NFT according to validation methods of some aspects of the present invention.
- Fig. 6 is a flowchart illustrating an exemplary validation process according to one or more aspects of the present invention.

### DETAILED DESCRIPTION OF THE DRAWINGS

Aspects and embodiments of the present invention will now be discussed with reference to the accompanying figures. Further aspects and embodiments will be apparent to those skilled in the art.

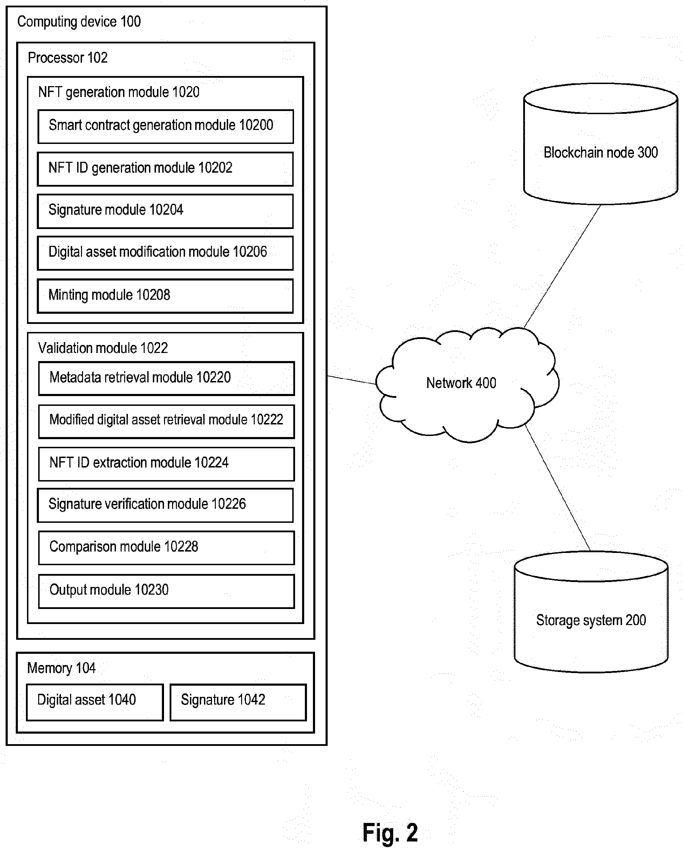

Fig. 2 is a high-level system which may be employed to execute computer-implemented methods according to some aspects of the present invention. At a high level, the system includes a computing device 100, a storage system 200 and a blockchain node 300. In Fig. 1, all of these are shown to be connected by a network 400. The network 400 may be a wired network such as a LAN, or WAN, or a wireless network such as a Wi-Fi network, the Internet, or a cellular network. The system 100, storage system 200 and blockchain node 300 are not necessarily all connected to each other by a single network, and may be connected in pairs by three separate networks. Or, any two, or three of the system 100, storage system 200 and the blockchain node 300 may be located on the same physical component. Components located on the same physical component may not require a network to communicate between them. Essentially, it will be appreciated that Fig. 2 shows only one example of the layout of a system comprising the computing system 100, storage system 200 and blockchain node 300. The skilled person is able to envisage other layouts without departing in any way from the scope of the present invention. The computing device 100 may be any suitable computing device which may be used for generating and minting NFTs to a blockchain. For example, the computing device 100 may be, or comprise, one or more of the following: a desktop computer, a laptop computer, a tablet, a smartphone. Of course, computing device 100 may include other suitable computing devices. The previous list is not intended to be exhaustive. The computing system 100 includes a processor 102 and a memory 104. In the example shown, the processor 102 and the memory 104 are part of the same computing system 100, but it will be appreciated that they may be located on separate physical components without deviating from the scope of the invention. The processor 102 comprises an NFT generation module 1020 and a validation module 1022. Once more, in Fig. 2, these are shown as both being part of the same processor 102, but it will be appreciated that these may also be located on separate physical components without deviating from the scope of the invention.

The processor 102 comprises several different modules. Herein, the term "module" is used to refer to a functional module which is configured or adapted to execute a particular function. The modules may be implemented in hardware (i.e. they may be separate physical components within a computer), in software (i.e. they may represent separate sections of code, which when executed by processor 102, cause it to perform a particular function), or in a combination of both.

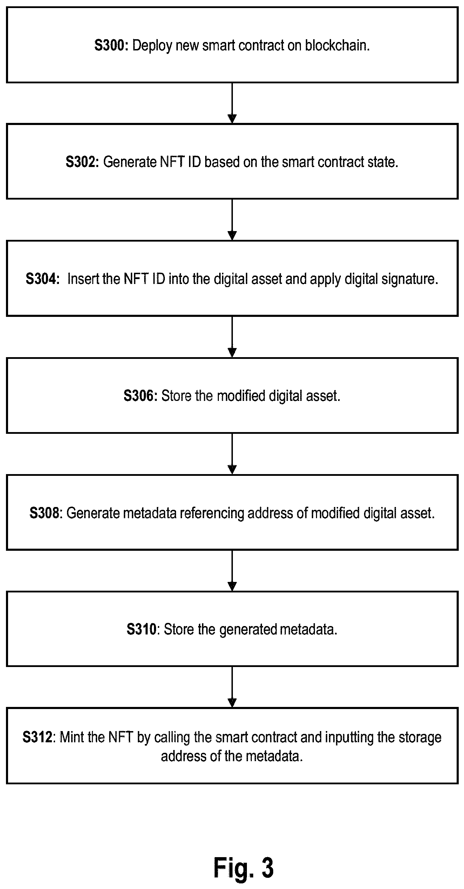

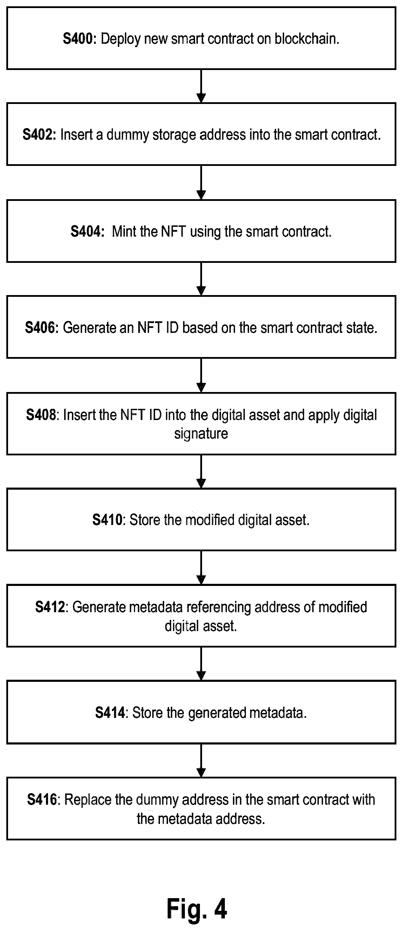

Broadly, the purpose of the NFT generation module 1020 and its constituent modules is, as the name suggests, the generation and minting of a trusted NFT. The NFT generation module 1020 comprises the following modules: a smart contract generation module 10200, a NFT ID generation module 10202, a signature module 10204, a digital asset modification module 10204, and a minting module 10208. The function of each of these modules will shortly be described in detail with reference to Figs. 3 and 4.

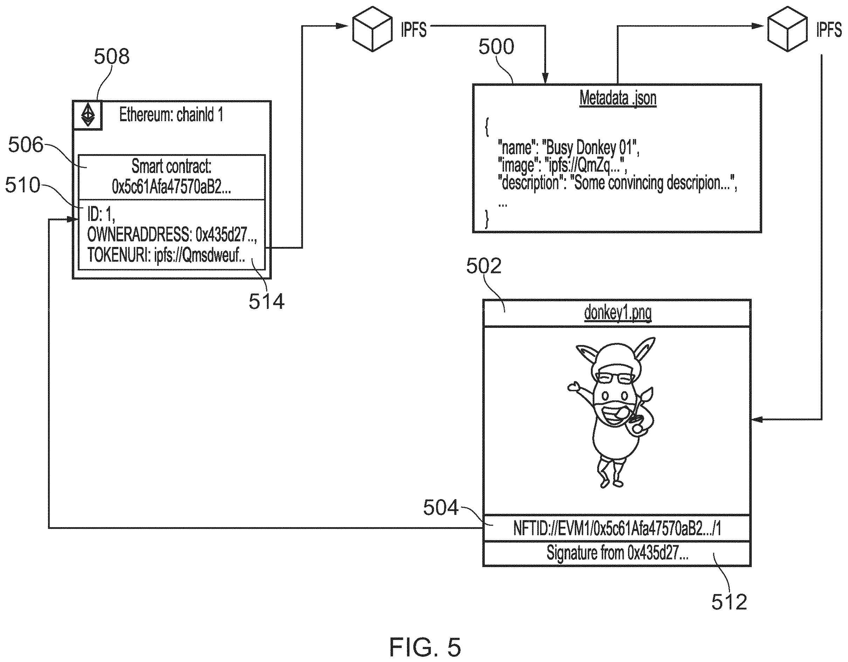

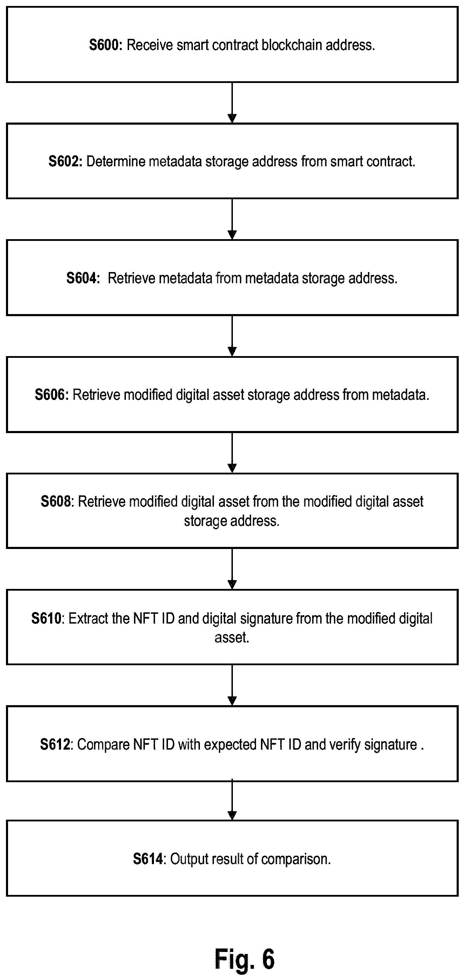

Broadly, the purpose of the validation module 1022 is to determine whether an NFT which is on offer for sale on an NFT marketplace is genuine, based on e.g. the address of the smart contract. The validation module 1022 comprises the following modules: a metadata extraction module 10220, a modified digital asset retrieval module 10222, a NFT ID extraction module 10224, a signature verification module 10226, a comparison module 10228, and an output module 10230. The function of each of these modules will be described shortly with reference to Figs. 5 and 6.

We now describe the operation of the NFT generation module 1020 of the processor 102, with reference to Figs. 3 and 4. Before discussing the operations which are executed in detail, it is useful to provide some context. The purpose of one aspect of the present invention is the generation and minting of trusted NFTs onto a blockchain, such as, but by no means limited to, the *Ethereum, Solana,* or *Algorand* blockchains.

One context in which this might be performed is if a digital artist (this term being used broadly to refer to the creator of a digital asset) wishes to sell or otherwise trade an NFT on an NFT marketplace. In these cases, the marketplace itself may host a service or platform for the generation and minting of trusted NFTs. Alternatively, the service or platform might be hosted by an external outfit, offering the service to artists, marketplaces or both. Importantly, the process ensures that only trusted entities (i.e. either the artist themselves or the trusted NFT marketplace) are able to generate and mint the trusted and, crucially, verifiable NFTs.

Accordingly, the processor 102 of the computing system 100 may receive a request (in most cases, an electronic request) for the generation and minting of a trusted NFT. This request may be received via a graphical user interface of e.g. a website, but it will be appreciated that there are many ways of receiving such a request. In response to the request, the process illustrated in either Fig. 3 or Fig. 4 may begin. Each of these drawings illustrates a perfectly valid scheme for generating and minting a trusted NFT, and the scheme to be selected depends on the specific operation of the blockchain in question, and more specifically, the manner in which the blockchains assign smart contract addresses and/or token IDs. This will be explained in more detail below.

In step S300 of Fig. 3, in response to receipt of the request for a trusted NFT, the smart contract generation module 10200 deploys a new smart contract on the blockchain, of which blockchain node 300 is a part, and optionally a new token ID is generated within the smart contract. The new smart contract is preferably specific to the customer. In some cases, rather than deploying a new smart contract on the blockchain, an existing smart contract which is already deployed on the blockchain is retrieved, and a new token ID is generated within that smart contract.

In step S302, a NFT ID is generated by the NFT ID generation module 10202, based on the smart contract address or ID. The generated NFT ID is specific to the type of blockchain on which the smart contract has been deployed. In this way, it is possible to avoid the actions of malicious actors such as MA2 in Fig. 1, in which NFT is hosted on a different blockchain. The exact form of the NFT ID varies depending on the blockchain in question, due to the specific form of the smart contract addresses in different blockchains.

For EVM-compatible blockchains, the NFT ID may take the form:
*NFTID:*//*EVM{chainID}*/ *{contract address}*/*{token ID}*

In EVM-compatible blockchains it is possible to determine the token ID even before it has been minted, because of the way in which the token IDs are generated, i.e. the token ID is incremented by 1 with the generation of each new token ID.

For the *Solana* blockchain, the NFT ID may take the form:
*NFTID:*//*Solana*/*{mint address}*/*{name}*

In the *Solana* scheme, *mint address* is the term used for the minting authority, i.e. the address owning the authority to mint new tokens.

For the *Algorand* blockchain, the NFT ID may take the form:
*NFTID:*//*Algorand*/*{creator account}*/*{asset name}*

In all of these examples, the important feature is that the NFT ID can be generated based on information which is available before the NFT has been minted, but which includes everything required to loop back the references to the unique token ID on a given blockchain.

For *Solana* and *Algorand,* the "token address" and "Asset ID" respectively cannot be predicted before minting of the NFT. This is why they cannot be used in the NFT ID in the process of Fig. 3 (the process of Fig. 4 does enable the use of these fields for *Solana* and will be explained in more detail later).

After generation of the NFT ID in step S302, in step S304 the NFT ID is inserted into the digital asset 1040 by the digital asset modification module 10206, and a digital signature is generated and applied to the digital asset by the signature module 10204. These are discussed in turn.

Insertion of the NFT ID in step S304 may take place in any number of ways. For example, the NFT ID may be included in metadata associated with the digital asset (not to be confused with the metadata file which contains the reference to the address of the digital asset after storage). In more detail, for specific types of image file:
- For PNG files, the NFT ID may be included in one of the textual information chunks defined in the PNG standard⁷.
- For JPEG files, the NFT ID may be included in the COM node, as defined in the JPEG metadata standard⁸.
- For GIF files, the NFT ID may be included in the CommentExtensions, as defined in the GIF metadata standard⁹.
⁷ https://dev.exiv2.org/projects/exiv2/wiki/The_Metadata_in_PNG_files
⁸ https://docs.oracle.com/javase/8/docs/api/javax/imageio/metadata/doc-files/jpeg_metadata.html
⁹ https://docs.oracle.com/javase/7/docs/api/javax/imageio/metadata/doc-files/gif_metadata.html

Alternatively, rather than inserting the NFT ID into the image metadata, the NFT ID may be inserted into the media itself, i.e. into the digital asset itself, using steganography and/or watermarking techniques for still images, audio, or video. Such steganographic and watermarking techniques are well-known in the art.

Once the NFT ID is inserted into the digital asset (either the asset itself or the accompanying metadata) by the digital asset modification module 10206, it is referred to herein as the "modified digital asset".

In step S304, the signature module 10204 also adds a digital signature 1042 to the digital asset. Preferably, the signature module 10204 adds a digital signature generated using a private key associated with a trusted entity. For example, the private key may be associated with the artist themselves, the trusted marketplace, or the trusted external outfit providing the NFT generation/minting service. The signature maybe applied to just the modified digital asset, or the modified digital asset and associated metadata. Alternatively, the signature may be applied to the NFT ID. By signing the modified digital asset with a private key of a trusted entity, even if a malicious actor becomes aware of, and replicates, the scheme for generating and minting a trusted NFT according to the present invention, their tampering can still be detected, because they will not have access to the private key of the trusted entity. This therefore represents a further layer of security. The signature module 10204 may use one of any well-known digital signature algorithms to generate the signature based on the private key in question.

At this juncture, a smart contract has been deployed on the blockchain, with a new token ID, a blockchain- and customer-specific NFT ID has been generated and inserted into the digital asset to generate a modified digital asset, and the modified digital asset has been signed using a private key of a trusted entity. At this point, in step S306, the modified digital asset (plus signature) is stored in storage system 200. In order to ensure that the NFT is durable, the storage system 200 is preferably a storage system that ensures integrity and durability of the modified digital asset, such as *Arwaeave* or *IPFS*/*Filecoin.* These services guarantee both the integrity of the stored content, and also the longevity of the stored content.

After the modified digital asset (and signature) have been stored in the storage system 200, in step S308 a metadata JSON file is generated. The metadata JSON file includes a reference to the storage address of the modified digital asset in the storage system 200, e.g. in the form of a URL. The metadata JSON file may further comprise additional information such as the name of the modified digital asset file, and a description of the modified digital asset file. Strictly speaking the file need not be a JSON file, but this is part of the NFT standard, so realistically this is most likely to be the case in all implementations. In step S308 the generated metadata file is stored in storage system 200. In the example described, this is the same storage system 200 as the modified digital asset is stored in, but this need not be the case. It is however, preferable that the storage system 200 where the metadata file is stored is also a storage system that ensures integrity and durability of the modified digital asset, such as *Arwaeave* or *IPFS*/*Filecoin.* These services guarantee both the integrity of the stored content, and also the longevity of the stored content.

In the final step S312 of Fig. 3, the NFT is minted by execution of one operation of the smart contract, by the minting module 10208. Specifically, after or in response to the storage address of the metadata file being input into the smart contract, the smart contract is configured execute a minting operation. The minting module 10208 in this context may refer to the code containing the instructions for this process to occur. At this point, the smart contract is published to the blockchain of which blockchain node 300 is part, and the NFT is considered to be minted.

Once the NFT is minted as described above, there is a clear chain of connected features, as illustrated in Fig. 5. The metadata file 500 stored on IPFS contains a reference to the URL or other storage address of the modified digital asset 502 which is also stored on IPFS. The modified digital asset 502 contains an NFT ID 504 which refers uniquely to the address 506 of the smart contract 508 which minted the NFT, and the token ID 510 within the smart contract. Also, the modified digital asset 502 contains a digital signature 512 which is linked to a trusted entity responsible for deployment of the smart contract 508. The smart contract 508 contains a URL 514 or other storage address of the metadata file 500. Because of this complete chain, it is possible to detect tampering or other fraudulent activity, by detecting any inconsistencies within the chain. This is explained later in more detail, with reference to Fig. 6.

Fig. 4 shows a similar method to Fig. 3. However, Fig. 4 is applicable to blockchains for which it is not possible to predict the form that the smart contract address will take (and therefore to generate an NFT ID) before the NFT has been minted. The resulting arrangement is the same as is shown in e.g. Fig. 5, but the process for generating and minting the trusted NFT ID is slightly different. This method is particularly applicable for e.g. *Solana* blockchains, or any blockchains in which it is not possible to predict the form that the smart contract address will take before minting, and for which the token URL (or equivalent storage address) is a mutable parameter, i.e. it is possible to alter the URL (or equivalent storage address) of the metadata file within the smart contract *after* the smart contract has been minted. This is a feature of some blockchains, including *Solana,* but could also be implemented in EVM-compatible blockchains, if the minting contract is generated such that the contents of the NFT are mutable.

In step S400, as for step S300, in response to receipt of a request for a trusted NFT, a new smart contract is deployed on the blockchain of which blockchain node 300 is a part, and optionally a new token ID may be generated.

In step S402 of Fig. 4, a dummy URL (or equivalent storage address) is input into the deployed smart contract, and in step S404, it is minted using the minting module 10208 as a result. Herein, the term "dummy" is used to refer to an address which is in the correct form, or format, but which does not refer to the actual location of the (at this point, non-existent) metadata file. At this point, i.e. after minting, the smart contract address or ID is known. In the specific example of the *Solana* blockchain, the "token address" is generated, and known at this point.

In step S406, an NFT ID is generated based on the now-minted smart contract, by the NFT ID generation module 10202. The reader will recall that in e.g. a *Solana* blockchain, the "token address" parameter cannot be predicted before minting, hence why the NFT ID can only be generated by the NFT ID generation module 10202 after the minting step S404.

After generation of the NFT ID in step S406, the NFT ID is inserted into the digital asset by the digital asset modification module 10206, and a digital signature is generated and applied by the signature module 20104 in step S408. This may happen in the same way as step S304 of the computer-implemented method of Fig. 3. In steps S410 to S414 respectively, the modified digital asset is stored in storage system 200, metadata is generated referencing the storage address (i.e. the URL) of the modified digital asset in the storage system 200, the metadata is then stored on the storage system 200 (or a separate storage system, it does not matter as long as it has an address which uniquely identifies the storage location). These steps may proceed in the same way as steps S306 to S310 of Fig. 3.

In the final step of Fig. 4, S416, the dummy address associated with the NFT is replaced with the storage address of the metadata file. As discussed, this is possible because in blockchains such as *Solana,* the token URL (not the same as the token address, which defines the location of the minted smart contract in the blockchain) is a mutable parameter, and can therefore be updated. In some cases, it may be possible to modify the smart contract so that after the dummy address has been replaced with the metadata file storage address, it is no longer possible to modify that parameter. At this point, the chain of information is established as shown in Fig. 5. Although the processes of Fig. 3 and Fig. 4 differ, the overall result is the same.

The above disclosure relates to the process by which the chain of information shown in Fig. 5 is generated. By generating a trusted NFT in this manner, it is possible for users to validate whether an NFT which they are planning to buy or trade on an NFT marketplace, or the like, is legitimate. This can be done essentially by following the links shown in Fig. 5, in order to check whether each of the smart contract 508, the metadata file 500, and the digital asset 502 include the information which points to the correct location. If there are any "breaks" in the chain, this is suggestive of fraudulent activity (e.g. if the NFT ID in the digital asset 502 does not correspond to the smart contract 508, or the like). Fig. 6 presents a flowchart of an exemplary validation process which may be executed by the validation module 1022 of the processor 102.

In a first step of Fig. 6, S600, the smart contract blockchain address is received by the validation module 1022. For example, an entity who is in the process of purchasing an NFT on an NFT marketplace website may input the smart contract address on the particular blockchain, which is then received by the validation module 1022. Specifically, the smart contract address corresponds to the smart contract which minted the NFT. Having identified the smart contract, in step S602, the metadata storage address (usually in the form of a URL) is identified. Then, in step S604, the metadata, in the form of e.g. a JSON file, is retrieved from the identified storage address by the metadata retrieval module 10220. The metadata file, as we have discussed previously, includes a reference to the storage address of the modified digital asset. In step S606, this storage address is retrieved, and in step S608, the modified digital asset is retrieved from this address by the modified digital asset retrieval module 10222.

The validation process may then begin. In step S610, the NFT is extracted from the modified digital asset by the NFT ID extraction module 10224. This may comprise extracting it from the metadata associated with the modified digital asset, or extracting it from the modified digital asset file data itself (depending on the manner in which the NFT ID was inserted into the digital asset in the first place). After the NFT ID has been extracted, it is compared with the expected NFT ID in step S612 by the comparison module 10228. As discussed previously in detail in this application, the NFT ID may be generated based on features of the smart contract, the token ID, the creator of the smart contract, and the like. Thus, the "expected" NFT ID is the NFT ID made up of the specific set of properties of the minting contract in question. In addition, the digital signature may be verified by the signature verification module 10226.

In step S614, the results of the comparison and/or verification steps is/are output by the output module 10230. In some cases, if the extracted NFT ID does not match the expected NFT ID, the sale of the NFT may automatically be prevented. Alternatively, outputting the result of the comparison may simply comprise generating instructions which cause a message to be displayed on a display component of a computing device using which the user is accessing the NFT marketplace. In some cases, the computer-implemented method may comprise a step of determining whether an NFT ID is present in the modified digital asset. If there is no NFT ID in the modified digital asset, then the method may skip straight to the output step, informing the user that there is no NFT ID present.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of minting a trusted and verifiable non-fungible token, NFT, on a blockchain, the NFT corresponding to a digital asset, the computer-implemented method comprises the steps of:
receiving a request to mint the NFT on the blockchain;
deploying, retrieving, or accessing programming logic on the blockchain, the programming logic configured to mint the NFT to the blockchain;
providing a dummy electronic storage address as an input to the programming logic;
executing the programming logic, thereby minting a temporary NFT to the blockchain;
generating an NFT ID uniquely identifying the NFT;
inserting the NFT ID into the digital asset to generate a modified digital asset;
storing the modified digital asset in an electronic memory, the storage location of the modified digital asset described by a first electronic storage address;
generating metadata comprising the first storage address and storing the generated metadata in an electronic memory, the storage location of the metadata described by a second electronic storage address;
replacing the dummy electronic storage address in the minted NFT with the second storage address, thereby generating the trusted NFT.

2. The computer-implemented method of claim 1, wherein:
the NFT ID is specific to the blockchain on which the NFT is to be minted.

3. The computer-implemented method of claim 1 or claim 2, wherein:
the NFT ID is in the form of a block of data comprising a plurality of sub-blocks of data, each sub-block of data comprising data indicative of a respective attribute or aspect of the smart contract.

4. The computer-implemented method of any one of claims 1 to 3, wherein:
the programming logic is in the form of a smart contract configured to mint the NFT to the blockchain in response to one or more inputs, the one or more inputs comprising the dummy electronic storage address.

5. The computer-implemented method of claim 4, wherein:
the blockchain is a Solana blockchain and the NFT ID comprises: a first sub-block comprising a mint address; and a second sub-block comprising a name;
or
the blockchain is an Algorand blockchain and the NFT ID comprises: a first sub-block comprising a creator account; and a second sub-block comprising an asset name.

6. The computer-implemented method of any one of claims 1 to 5, wherein:
inserting the NFT ID in the digital asset comprises inserting the NFT ID into metadata relating to the digital asset, the metadata to be stored at the first storage address with the digital asset.

7. The computer-implemented method of any one of claims 1 to 5, wherein:
inserting the NFT ID into the digital asset comprises embedding the NFT ID into the data representing the digital asset, in particular steganographically.

8. The computer-implemented method of any one of claims 1 to 7, further comprising:
applying, using a private key of a trusted party, a cryptographic signature to the digital asset, the modified digital asset, or the NFT ID before storing at the first storage location, using a private key of a trusted party.

9. The computer-implemented method of any one of claims 1 to 8, wherein:
the metadata containing the first electronic storage address is a JavaScript Object Notation (JSON) format file.

10. The computer-implemented method of any one of claims 1 to 9, wherein:
the first electronic storage address and/or the second electronic storage address corresponds to a location in a decentralized, permanent storage system.

11. The computer-implemented method of claim 10, wherein:
the first storage address and/or the second storage address corresponds to a location in a storage system utilizing an *Arweave* protocol; or
the first storage address and/or the second storage address corresponds to a location in an IPFS storage system utilizing a *Filecoin* protocol.

12. The computer-implemented method of any one of claims 1 to 11, wherein
the programming logic is a smart contract which supports mutability of an input parameter, in particular the second storage address in the NFT.

13. The computer-implemented method of claim 4, the method further comprising:
updating the properties of the smart contract to prevent further modification of the NFT, after the dummy electronic storage address has been replaced with the second electronic storage address.

14. A computer readable storage medium, having stored thereon a computer program comprising instructions which, when the program is executed by a computer, cause the computer to carry out the steps of a computer-implemented method according to any one of the preceding claims.

15. A system comprising a processor which is configured to execute the computer-implemented method according to any one of the preceding claims.

## Patentansprüche

1. Computerimplementiertes Verfahren zum Prägen eines vertrauenswürdigen und überprüfbaren nicht fungiblen Tokens (NFT) auf eine Blockchain, wobei das NFT einem digitalen Asset entspricht, wobei das computerimplementierte Verfahren die folgenden Schritte umfasst:
Empfangen einer Anforderung zum Prägen des NFT auf die Blockchain;
Bereitstellen, Abrufen oder Zugreifen auf eine Programmierlogik auf der Blockchain, wobei die Programmierlogik so konfiguriert ist, dass sie das NFT auf die Blockchain prägt;
Bereitstellen einer elektronischen Dummy-Speicheradresse als Eingabe für die Programmierlogik;
Ausführen der Programmierlogik, wodurch ein temporäres NFT auf die Blockchain geprägt wird;
Erzeugen einer NFT-ID, die das NFT eindeutig identifiziert;
Einfügen der NFT-ID in das digitale Asset, um ein modifiziertes digitales Asset zu erzeugen;
Speichern des modifizierten digitalen Assets in einem elektronischen Speicher, wobei der Speicherort des modifizierten digitalen Assets durch eine erste elektronische Speicheradresse beschrieben wird;
Erzeugen von Metadaten, die die erste Speicheradresse umfassen, und Speichern der erzeugten Metadaten in einem elektronischen Speicher, wobei der Speicherort der Metadaten durch eine zweite elektronische Speicheradresse beschrieben wird;
Ersetzen der elektronischen Dummy-Speicheradresse im geprägten NFT durch die zweite Speicheradresse, wodurch das vertrauenswürdige NFT erzeugt wird.

2. Computerimplementiertes Verfahren nach Anspruch 1, wobei:
die NFT-ID spezifisch für die Blockchain ist, auf die das NFT geprägt werden soll.

3. Computerimplementiertes Verfahren nach Anspruch 1 oder Anspruch 2, wobei: die NFT-ID in Form eines Datenblocks vorliegt, der eine Vielzahl von Datenunterblöcken umfasst, wobei jeder Datenunterblock Daten umfasst, die auf ein jeweiliges Attribut oder einen jeweiligen Aspekt des Smart Contracts hinweisen.

4. Computerimplementiertes Verfahren nach einem der Ansprüche 1 bis 3, wobei: die Programmierlogik in Form eines Smart Contracts vorliegt, der so konfiguriert ist, dass er das NFT als Reaktion auf eine oder mehrere Eingaben in die Blockchain prägt, wobei die eine oder mehrere Eingaben die elektronische Dummy-Speicheradresse umfassen.

5. Computerimplementiertes Verfahren nach Anspruch 4, wobei:
die Blockchain eine Solana-Blockchain ist und die NFT-ID umfasst: einen ersten Unterblock umfassend eine Prägeadresse; und einen zweiten Unterblock umfassend einen Namen;
oder
die Blockchain eine Algorand-Blockchain ist und die NFT-ID umfasst: einen ersten Unterblock umfassend ein Erstellerkonto; und einen zweiten Unterblock umfassend einen Asset-Namen.

6. Computerimplementiertes Verfahren nach einem der Ansprüche 1 bis 5, wobei: das Einfügen der NFT-ID in das digitale Asset das Einfügen der NFT-ID in sich auf das digitale Asset beziehende Metadaten umfasst, wobei die Metadaten an der ersten Speicheradresse zusammen mit dem digitalen Asset gespeichert werden sollen.

7. Computerimplementiertes Verfahren nach einem der Ansprüche 1 bis 5, wobei: das Einfügen der NFT-ID in das digitale Asset das Einbetten der NFT-ID in die das digitale Asset darstellenden Daten umfasst, insbesondere steganografisch.

8. Computerimplementiertes Verfahren nach einem der Ansprüche 1 bis 7, ferner umfassend:
Anwenden, unter Verwendung eines privaten Schlüssels einer vertrauenswürdigen Partei, einer kryptografischen Signatur auf das digitale Asset, das modifizierte digitale Asset oder die NFT-ID vor dem Speichern an dem ersten Speicherort unter Verwendung eines privaten Schlüssels einer vertrauenswürdigen Partei.

9. Computerimplementiertes Verfahren nach einem der Ansprüche 1 bis 8, wobei: die Metadaten, die die erste elektronische Speicheradresse enthalten, eine Datei im JavaScript Object Notation (JSON)-Format sind.

10. Computerimplementiertes Verfahren nach einem der Ansprüche 1 bis 9, wobei: die erste elektronische Speicheradresse und/oder die zweite elektronische Speicheradresse einem Ort in einem dezentralen, permanenten Speichersystem entspricht.

11. Computerimplementiertes Verfahren nach Anspruch 10, wobei:
die erste Speicheradresse und/oder die zweite Speicheradresse einem Ort in einem Speichersystem entspricht, das ein Arweave-Protokoll nutzt; oder
die erste Speicheradresse und/oder die zweite Speicheradresse einem Ort in einem IPFS-Speichersystem entspricht, das ein Filecoin-Protokoll nutzt.

12. Computerimplementiertes Verfahren nach einem der Ansprüche 1 bis 11, wobei:
die Programmierlogik ein Smart Contract ist, der die Veränderbarkeit eines Eingabeparameters unterstützt, insbesondere der zweiten Speicheradresse im NFT.

13. Computerimplementiertes Verfahren nach Anspruch 4, das Verfahren ferner umfassend:
Aktualisieren der Eigenschaften des Smart Contracts, um eine weitere Änderung des NFT zu verhindern, nachdem die elektronische Dummy-Speicheradresse durch die zweite elektronische Speicheradresse ersetzt wurde.

14. Computerlesbares Speichermedium, auf dem ein Computerprogramm gespeichert ist, das Anweisungen umfasst, die, wenn das Programm von einem Computer ausgeführt wird, den Computer veranlassen, die Schritte eines computerimplementierten Verfahrens gemäß einem der vorhergehenden Ansprüche auszuführen.

15. System umfassend einen Prozessor, der so konfiguriert ist, dass er das computerimplementierte Verfahren gemäß einem der vorhergehenden Ansprüche ausführt.

## Revendications

1. Procédé, mis en œuvre par ordinateur, de frappe d'un jeton non-fongible (NFT, non-fungible token), fiable et vérifiable, sur une chaîne de blocs (blockchain), le NFT correspondant à un actif numérique, le procédé mis en œuvre par ordinateur comprenant les étapes consistant à :
recevoir une requête de frappe du NFT sur la blockchain,
déployer, récupérer ou accéder à une logique de programmation sur la blockchain, la logique de programmation étant configurée pour frapper le NFT sur la blockchain ;
fournir une adresse de stockage électronique factice à titre d'entrée à la logique de programmation ;
exécuter la logique de programmation, frappant ainsi un NFT temporaire sur la blockchain ;
générer un ID de NFT qui identifie uniquement le NFT ;
insérer l'ID de NFT dans l'actif numérique pour générer un actif numérique modifié ;
stocker l'actif numérique modifié dans une mémoire électronique, l'emplacement de stockage de l'actif numérique modifié étant décrit par une première adresse de stockage électronique ;
générer des métadonnées comprenant la première adresse de stockage et stocker les métadonnées générées dans une mémoire électronique, l'emplacement de stockage des métadonnées étant décrit par une deuxième adresse de stockage électronique ;
remplacer l'adresse de stockage électronique factice dans le NFT frappé, par la deuxième adresse de stockage, générant ainsi le NFT fiable.

2. Procédé mis en œuvre par ordinateur selon la revendication 1, dans lequel :
l'ID de NFT est spécifique à la blockchain sur laquelle le NFT doit être frappé.

3. Procédé mis en œuvre par ordinateur selon la revendication 1 ou selon la revendication 2, dans lequel :
l'ID de NFT est sous la forme d'un bloc de données comprenant une pluralité de sous-blocs de données, chaque sous-bloc de données comprenant des données indiquant un attribut ou aspect respectif du contrat automatisé (smart contract).

4. Procédé mis en œuvre par ordinateur selon l'une quelconque des revendications 1 à 3, dans lequel :
la logique de programmation est sous la forme d'un smart contract configuré pour frapper le NFT sur la blockchain en réponse à une ou plusieurs entrées, lesdites une ou plusieurs entrées comprenant l'adresse de stockage électronique factice.

5. Procédé mis en œuvre par ordinateur selon la revendication 4, dans lequel :
la blockchain est une blockchain Solana et l'ID de NFT comprend : un premier sous-bloc comprenant une adresse de frappe ; et un deuxième sous-bloc comprenant un nom ;
ou
la blockchain est une blockchain Algorand et l'ID de NFT comprend : un premier sous-bloc comprenant un compte créateur ; et un deuxième sous-bloc comprenant un nom d'actif.

6. Procédé mis en œuvre par ordinateur selon l'une quelconque des revendications 1 à 5, dans lequel :
l'étape consistant à insérer l'ID de NFT dans l'actif numérique comprend d'insérer l'ID de NFT dans des métadonnées en lien avec l'actif numérique, les métadonnées devant être stockées à la première adresse de stockage avec l'actif numérique.

7. Procédé mis en œuvre par ordinateur selon l'une quelconque des revendications 1 à 5, dans lequel :
l'étape consistant à insérer l'ID de NFT dans l'actif numérique comprend d'intégrer l'ID de NFT dans les données représentant l'actif numérique, en particulier de manière stéganographique.

8. Procédé mis en œuvre par ordinateur selon l'une quelconque des revendications 1 à 7, comprenant en outre l'étape consistant à :
appliquer, à l'aide d'une clé privée d'une partie fiable, une signature cryptographique à l'actif numérique, à l'actif numérique modifié, ou à l'ID de NFT, avant l'étape de stockage au premier emplacement de stockage, à l'aide d'une clé privée d'une partie fiable.

9. Procédé mis en œuvre par ordinateur selon l'une quelconque des revendications 1 à 8, dans lequel :
les métadonnées contenant la première adresse de stockage électronique est un fichier au format JavaScript Object Notation (JSON).

10. Procédé mis en œuvre par ordinateur selon l'une quelconque des revendications 1 à 9, dans lequel :
la première adresse de stockage électronique et/ou la deuxième adresse de stockage électronique correspondent à un emplacement dans un système de stockage permanent décentralisé.

11. Procédé mis en œuvre par ordinateur selon la revendication 10, dans lequel :
la première adresse de stockage électronique et/ou la deuxième adresse de stockage électronique correspondent à un emplacement dans un système de stockage utilisant un protocole *Arweave* ; ou
la première adresse de stockage électronique et/ou la deuxième adresse de stockage électronique correspondent à un emplacement dans un système de stockage IPFS utilisant un protocole *Filecoin.*

12. Procédé mis en œuvre par ordinateur selon l'une quelconque des revendications 1 à 11, dans lequel :
la logique de programmation est un smart contract qui supporte une mutabilité d'un paramètre d'entrée, en particulier la deuxième adresse stockage dans le NFT.

13. Procédé mis en œuvre par ordinateur selon la revendication 4, le procédé comprenant en outre l'étape consistant à :
mettre à jour les propriétés du smart contract pour empêcher une modification supplémentaire du NFT, après remplacement de l'adresse de stockage électronique factice par la deuxième adresse de stockage électronique.

14. Support de stockage lisible par ordinateur ayant, stocké sur celui-ci, un programme d'ordinateur comprenant des instructions qui, quand le programme est exécuté par un ordinateur, amènent l'ordinateur à exécuter les étapes d'un procédé mis en œuvre par ordinateur selon l'une quelconque des revendications précédentes.

15. Système comprenant un processeur qui est configuré pour exécuter le procédé mis en œuvre par ordinateur selon l'une quelconque des revendications précédentes.
